**Europäisches Patentamt**

**European Patent Office**

**Office européen des brevets**

(19)

(11) Veröffentlichungsnummer : **0 365 758 B1**

(12)

# EUROPÄISCHE PATENTSCHRIFT

(45) Veröffentlichungstag der Patentschrift :
**14.10.92 Patentblatt 92/42**

(51) Int. Cl.⁵ : **G01B 7/30, G01D 5/242**

(21) Anmeldenummer : **89113005.6**

(22) Anmeldetag : **15.07.89**

(54) **Messeinrichtung zur Bestimmung des Drehwinkels.**

(30) Priorität : **20.07.88 DE 3824533**

(43) Veröffentlichungstag der Anmeldung :
**02.05.90 Patentblatt 90/18**

(45) Bekanntmachung des Hinweises auf die
Patenterteilung :
**14.10.92 Patentblatt 92/42**

(84) Benannte Vertragsstaaten :
**DE ES FR GB IT**

(56) Entgegenhaltungen :
**WO-A-89/02058**
**DE-A- 2 951 148**
**DE-A- 3 307 105**

(73) Patentinhaber : **ROBERT BOSCH GMBH**
**Postfach 30 02 20**
**W-7000 Stuttgart 30 (DE)**

(72) Erfinder : **Dobler, Klaus, Dr.-Ing.**
**Bettäckerstrasse 12**
**W-7016 Gerlingen (DE)**
Erfinder : **Hachtel, Hansjörg, Dipl,-Ing,**
**Buchenstrasse 4**
**W-7251 Weissach (DE)**

## Beschreibung

### Stand der Technik

Die Erfindung geht aus von einer Meßeinrichtung zur Bestimmung des Drehwinkels nach der Gattung des Hauptanspruchs. Bei einer z.B aus der DE-A-3307105 bekannten Meßeinrichtung wird die Verdrehung einer Welle mit Hilfe zweier relativ zueinander bewegter, konzentrisch angeordneter Hülsen bestimmt. Eine der Hülsen weist zwei Reihen gegeneinander versetzter Schlitze auf, die den elektrisch nicht leitenden Bereich bilden. In der anderen Hülse ist eine Reihe durchgehender, ebenfalls in Richtung zur Hülsenachse verlaufender Schlitze ausgebildet. Im Bereich der beiden Schlitzreihen der ersten Hülse ist mindestens je eine von einem hochfrequenten Wechselstrom durchflossene Spule angeordnet. Durch die relative tangentiale Verschiebung der beiden Hülsen zueinander wird die elektrisch nicht leitende Fläche der Hülsen, d.h. die Öffnungsfläche der Schlitze verändert, wodurch die Dämpfung der Spulen variiert wird. Die Meßeinrichtung hat den Nachteil, daß nur kleine Drehwinkel meßbar sind.

In der DE-A-2 951 148 wird eine Meßvorrichtung beschrieben, bei der in einem Vollzylinder in Achsrichtung ausgebildete Nuten vorhanden sind. Diese Nuten sind in regelmäßigen Abständen über die gesamte Mantelfläche verteilt, und wirken mit in einer Hülse ausgebildeten Schlitzen zusammen. In dieser Schrift wird vor allem auf das Meßprinzip eingegangen. Während der Torsion wird hierbei die zur Erzeugung von Wirbelströmen zur Verfügung stehende Fläche verändert, wodurch in der Spule eine Impedanzänderung hervorgerufen wird.

### Vorteile der Erfindung

Die erfindungsgemäße Meßeinrichtung mit den kennzeichnenden Merkmalen des Anspruchs 1 hat demgegenüber den Vorteil, daß sie sehr klein baut und daß ein Meßwinkel von 180° möglich ist, wobei ein linearer, eindeutig definierter Meßbereich von mindestens 130° möglich ist. Durch entsprechende Erhöhung der Anzahl der Ausfräsungen können kleinere Drehwinkel mit einer größeren Auflösung und Meßgenauigkeit gemessen werden.

Durch die in den abhängigen Ansprüchen aufgeführten Maßnahmen sind vorteilhafte Weiterbildungen der im Anspruch 1 angegebenen Meßeinrichtung möglich.

### Zeichnung

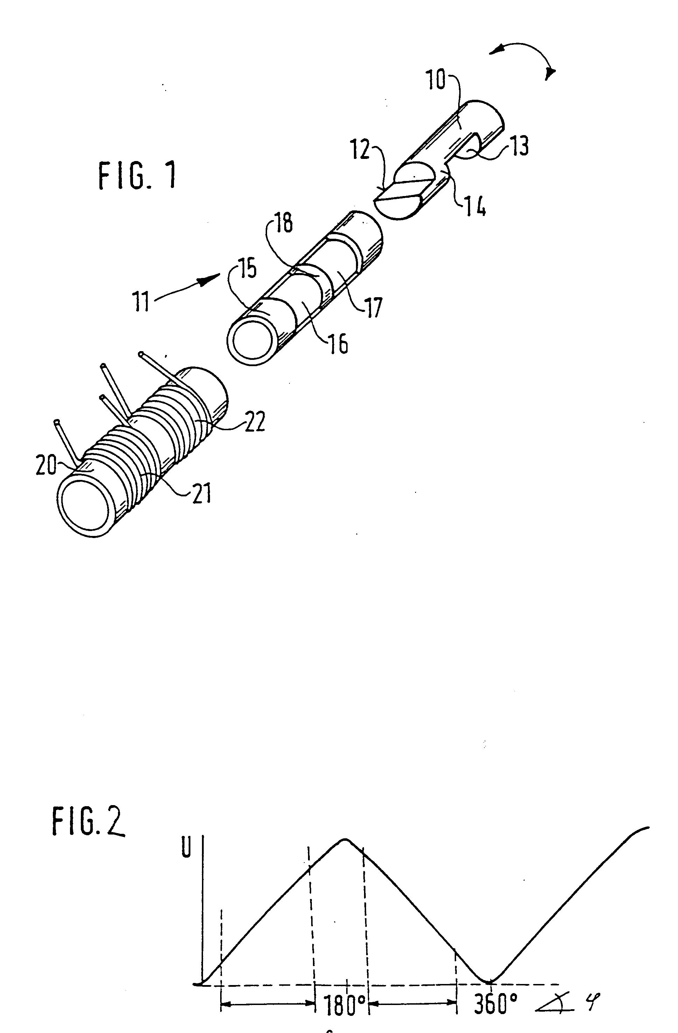

Ein Ausführungsbeispiel der Erfindung ist in der Zeichnung dargestellt und in der nachfolgenden Beschreibung näher erläutert. Es zeigen die Figur 1 die Meßeinrichtung in einer Explosionsdarstellung und Figur 2 ein Diagramm des Meßsignalverlaufs über dem Drehwinkel.

### Beschreibung des Ausführungsbeispiels

In Figur 1 ist mit 10 ein vollzylindrischer, aus elektrisch leitendem Material bestehender Drehkörper eines Sensors 11 bezeichnet, der mit einem nicht dargestellten Bauteil verbunden ist, dessen Drehwinkel bestimmt werden soll. Im Drehkörper 10 sind senkrecht zur Drehachse zwei parallel verlaufende Schlitze 12, 13 eingefräst, die die elektrisch nicht leitenden Bereiche darstellen. Je weiter die Schnittfläche der Schlitze 12, 13 von der Achse des Drehkörpers 10 entfernt ist, desto kleiner ist der meßbare Drehwinkel. Geht die Schnittfläche genau durch die Achse des Drehkörpers 10, so wird der maximal mögliche, eindeutig erfaßbare Drehwinkel von 180° erreicht. Die beiden Schlitze 12, 13 sind jeweils auf der gegenüberliegenden Seite des Drehkörpers 10 ausgebildet und axial gegeneinander um einen kleinen Steg 14 versetzt.

Der Drehkörper 10 wird in einen rohrförmigen, aus elektrisch leitendem Material bestehenden Körper 15 hineingeschoben, der zwei in der Wand eingefräste Fenster 16, 17 aufweist. Die Fenster 16, 17 sind auf einer Wandseite angeordnet und so ausgebildet, daß das erste Fenster 16 den Schlitz 12 überdeckt und das zweite Fenster 17 von der Rückseite des Schlitzes 13 abgeschlossen wird. Die Breite des Stegs 18 zwischen den beiden Fenstern 16, 17 stimmt mit der Breite des Stegs 14 zwischen den Schlitzen 12, 13 überein.

Über den Körper 15 ist ein hülsenförmiger Spulenkörper 20 aus elektrisch nicht leitendem Material geschoben, auf den im Bereich der beiden Fenster 16, 17 je eine Spule 21, 22 aufgebracht ist, die in einer Wheatstone'schen Halbbrücke verschaltet sind. Zur Erhöhung der Meßgenauigkeit können aber auch mehrere, insbesondere vier Spulen verwendet werden, die dann in einer vollen Wheatstone'schen Brückenschaltung angeordnet sind.

Die Meßeinrichtung arbeitet nach dem induktiven oder nach dem Wirbelstrommeßprinzip. Beim Wirbelstromprinzip werden die Spulen 21, 22 von einem hochfrequenten Wechselstrom durchflossen. Zur Messung wird der Drehkörper 10 im Körper 15 bzw. mittelbar im Spulenkörper 20 gedreht. An den Spulen 21, 22 entsteht ein magnetisches Wechselfeld, das auf der metallischen Oberfläche des Drehkörpers 10 Wirbelströme bewirkt. Je größer dabei die vom Magnetfeld durchsetzte Fläche des Drehkörpers 10 ist, desto mehr Wirbelströme werden erzeugt. Ferner ist die Größe der erzeugten Wirbelströme abhängig vom verwendeten Material des Drehkörpers 10 insbesondere dessen Oberfläche, sowie vom Abstand der Spulen 21, 22 zu der Oberfläche des Drehkörpers 10. Durch die erzeugten Wirbelströme wird der Spulen-Wechselstromwiderstand verringert, was eine Verkleinerung der an den Spulen 21, 22 anliegenden Spannungen bewirkt. In Grundstellung des Drehkörpers 10 ist ein Fenster 16 durch den Schlitz 12 völlig geöffnet, während das andere Fenster 17 durch die Rückseite der Wand des Schlitzes 13 verschlossen ist. Bei der Drehbewegung des Drehkörpers 10 wird das eine Fenster 16 durch die Wand des Drehkörpers 10 um denselben Betrag verschlossen, um den das andere Fenster 17 durch den Schlitz 13 geöffnet wird. Dadurch wird jeweils die den Spulen 21, 22 zugeordnete Größe der Oberfläche des Drehkörpers 10, d.h. die Größe des Bereichs, auf dem sich die Wirbelströme ausbilden können, verändert, was eine gegensinnig Änderung der Impedanz der Spulen 21, 22 bewirkt. Im in der Figur 2 dargestellten Diagramm ist die an der Wheatstone'schen Halbbrückenschaltung abgegriffene Meßspannung U über dem jeweiligen Drehwinkel 4 des Drehkörpers 10 aufgetragen. Es ist ersichtlich, daß die Meßspannung U von einem Drehwinkel von 0° bis ca. 180° ansteigt und bei einer weiteren Drehbewegung des Drehkörpers 10 bis 360° wieder abnimmt. Von 0° bis 180° wird, wie oben beschrieben, das eine Fenster 16 immer mehr geöffnet, während das andere Fenster 17 immer mehr geschlossen wird. Wird der Drehkörper 10 weitergedreht, so wird das Fenster 16 wieder geschlossen und das Fenster 17 wieder geöffnet. Durch die Verschaltung der Spulen 21, 22 in der Wheatstone'schen Halbbrückenschaltung fällt in diesem Bereich die Meßspannung wieder ab. Aus dem Diagramm ist ersichtlich, daß über einen Drehwinkel von ca. 130° die Meßkurve linear verläuft. Durch die in den Randbereichen auftretenden Streuungen des Wechselfeldes, weicht der Verlauf der Meßkurve im Anfangsbereich und im Bereich um 180° von der Linearität ab. Ferner kann die Meßspannung nur über einen Meßwinkel von 0° bis 180° bzw. von 180° bis 360° eindeutig einer Stellung des Drehkörpers 10 zugeordnet werden.

Für das Meßverfahren ist es wichtig, daß die den Spulen zugeordneten elektrisch leitenden und elektrisch nicht leitenden Bereiche 12, 13 während der zu messenden Drehbewegung proportional zu dieser verändert werden. Es können die Schlitze 12, 13 somit auch mit einem elektrisch nicht leitenden Material ausgefüllt sein.

Ferner ist es auch möglich, die Fenster auf die gegenüberliegenden Seiten des Körpers 15 und die Schlitze auf einer Seite des Drehkörpers 10 auszubilden.

## Patentansprüche

1. Meßeinrichtung zur berührungsfreien Bestimmung eines Drehwinkels mit Hilfe zweier relativ zueinander verdrehbarer, konzentrisch angeordneter Körper (10, 15) und von Sensorspulen (21, 22), deren Impedanz durch die relative Veränderung der Größe der den Spulen zugeordneten Bereiche aus elektrisch leitendem und/oder ferromagnetischem Material der Körper (10, 15) variiert wird, wobei einer der beiden Körper zylindrisch gestaltet ist und mindestens zwei in axialer Richtung desselben zueinander versetzte Ausnehmungen (12, 13) aufweist, die mit im anderen rohrförmigen Körper (15) ausgebildeten, der Anzahl der Ausnehmungen (12, 13) entsprechenden Fenstern (16, 17) zusammenwirken, so daß während der Drehbewegung des zylindrischen Körpers (10) innerhalb des rohrförmigen Körpers (15) die Größe des elektrisch leitenden bereichs weitgehend im einen Fenster um den betrag vergrößert wird, um den er in einem anderen Fenster verkleinert wird, dadurch gekennzeichnet, daß die Ausnehmungen (12, 13) durch zwei segmentförmige, sich senkrecht zur Achse des zylindrischen Körpers (10) erstreckende Schnittflächen und durch eine dritte Schnittfläche begrenzt sind, daß durch die dritte Schnittfläche die Achse des zylindrischen Körpers (10) verläuft oder daß die dritte Schnittfläche parallel zur Achse des zylindrischen Körpers (10) ausgebildet ist.

2. Meßeinrichtung nach Anspruch 1, dadurch gekennzeichnet, daß die Ausnehmungen (12, 13) um einen kleinen Steg (14) gegeneinander versetzt sind.

3. Meßeinrichtung nach Anspruch 1 und/oder 2, dadurch gekennzeichnet, daß die Ausnehmungen (12, 13) auf gegenüberliegenden Seiten des zylindrischen Körpers (10) ausgebildet sind, und daß die Fenster (16, 17) sich auf einer Seite des rohrförmigen Körpers (15) befinden.

4. Meßeinrichtung nach einem der Ansprüche 1 bis 3, dadurch gekennzeichnet, daß im Bereich der Fenster (16, 17) des rohrförmigen Körpers (15) mindestens je eine von einem Wechselstrom durchflossene Spule (21, 22) angeordnet ist, die in einer Wheatstone'schen Brückenschaltung verschaltet sind.

5.  Meßeinrichtung nach einem der Ansprüche 1 bis 4, dadurch gekennzeichnet, daß die Sensorspulen (21, 22) auf einem Träger (20) aus elektrisch nicht leitendem Material aufgebracht sind.

## Claims

1.  Measuring device for the contactless determination of an angle of rotation with the aid of two concentrically arranged bodies (10, 15) which can be rotated relative to one another and of sensor coils (21, 22), the impedence of which is varied by the relative change in the size of the areas of electrically conductive and/or ferromagnetic material of the bodies (10, 15) allocated to the coils, one of the two bodies being cylindrically constructed and exhibiting at least two recesses (12, 13) which are offset with respect to one another in the axial direction of this body, which recesses operate in conjunction with windows (16, 17) formed in the other tubular body (15) and corresponding to the number of recesses (12, 13), so that the size of the electrically conductive area in one window is largely increased by the same amount by which it is decreased in another window during the rotary movement of the cylindrical body (10) inside the tubular body (15), characterised in that the recesses (12, 13) are limited by two segment-shaped planes of intersection extending at right angles to the axis of the cylindrical body (10) and by a third plane of intersection, in that the axis of the cylindrical body (10) extends through the third plane of intersection or in that the third plane of intersection is constructed parallel to the axis of the cylindrical body (10).

2.  Measuring device according to Claim 1, characterised in that the recesses (12, 13) are offset with respect to one another by a small web (14).

3.  Measuring device according to Claim 1 and/or 2, characterised in that the recesses (12, 13) are formed on opposite sides of the cylindrical body (10) and in that the windows (16, 17) are located on one side of the tubular body (15).

4.  Measuring device according to one of Claims 1 to 3, characterised in that, in the area of the windows (16, 17) of the tubular body (15), at least in each case one coil (21, 22), through which an alternating current flows, is arranged which coils are connected together in a Wheatstone bridge circuit.

5.  Measuring device according to one of Claims 1 to 4, characterised in that the sensor coils (21, 22) are mounted on a carrier (20) of electrically non-conductive material.

## Revendications

1) Système de mesure pour déterminer sans contact un angle de rotation à l'aide de deux corps (10, 15) pouvant tourner relativement l'un par rapport à l'autre, et disposées concentriquement et de bobines de capteurs (21, 22) dont l'impédance est modifiée par la variation relative de la grandeur des zones correspondant aux bobines en matériau électriquement conducteur et/ou ferromagnétique du corps (10, 15), dans lequel l'un des deux corps est formé de façon cylindrique et présente au moins deux évidements (12, 13) décalées l'un par rapport à l'autre dans le sens axial de ce corps, évidements qui coopèrent avec des fenêtres (16, 17) formées dans l'autre corps (15) de forme tubulaire, correspondant au nombre des évidements (12, 13), de telle sorte que pendant le mouvement de rotation du corps cylindrique (10) à l'intérieur du corps de forme tubulaire (15) la grandeur de la zone électriquement conductrice soit largement augmentée dans une fenêtre d'un montant dont elle est réduite dans une autre fenêtre, système caractérisé en ce que le évidements (12, 13) sont limités par deux surfaces d'entaille en forme de segment, s'étendant perpendiculairement à l'axe du corps cylindrique (10) et par une troisième surface d'entaille, en ce que l'axe du corps cylindrique (10) s'étend à travers la troisième surface d'entaille ou en ce que la troisième surface d'entaille est formée parallèlement à l'axe du corps cylindrique (10).

2) Dispositif de mesure selon la revendication 1, caractérisé en ce que les évidements (12, 13) sont décalés l'une par rapport à l'autre d'une petite entretoise (14).

3) Dispositif de mesure selon la revendication 1 et/ou 2, caractérisé en ce que les évidements (12, 13) sont constitués sur des côtés se faisant vis-à-vis du corps cylindrique (10) et en ce que les fenêtres (16, 17) se trouvent sur un côté du corps de forme tubulaire (15).

4) Dispositif de mesure selon l'une des revendications 1 à 3, caractérisé en ce que dans la zone de la fenêtre (16, 17) du corps de forme tubulaire (15) est disposée au moins une bobine (21, 22) parcourue par un courant alternatif, bobines qui sont intercalées dans un circuit en pont de Wheatstone.

5) Dispositif de mesure selon l'une des revendications 1 à 4, caractérisé en ce que les bobines de capteurs (21, 22) sont placées sur un support (20) en un matériau électriquement non conducteur.

FIG. 1

FIG.2